# EUROPEAN PATENT APPLICATION

(11) **EP 2 446 960 A1**
(43) Date of publication of application: **02.05.2012**
(21) Application number: 10075723.6
(22) Date of filing: 29.10.2010
(51) Int. Cl.: B01J 8/00, B01J 8/10, B01J 8/38, C08F 10/00, C08F 2/34

(54) **Feeding solid material into a high density fluidized bed reactor**

(71) Applicant: Borealis AG, 1220 Vienna (AT)
(72) Inventor: Weickert, Gunter, 48683 Ahaus (DE); Bergstra, Michiel, 2600 Berchem (BE); Eriksson, Erik, 00810 Helsinki (FI)
(74) Representative: Prins, Hendrik Willem

(57) **Abstract**

The reactor system (40) comprises a first reactor unit (47) with an outlet (50) for an product stream comprising a solid phase product in particulate form, and a fluidized bed reactor unit (41) provided with a particle inlet (64) coupled to the outlet of the first reactor unit (47) through a transportation pipe (60), which comprises mechanical displacement means (62) embodied as a screw and driven to rotate at a predefined rotation speed, and a densification zone (65) defined between said mechanical displacement means (62) and said particle inlet (64), in which densification zone (65), in operation, a density of the product stream is increased, said densification zone (65) defining a flow direction into said fluidized bed reactor unit (41). An unobstructed space (A) is defined in said fluidized bed reactor unit (41), the space extending from said particle inlet (64) over a distance of at least 0.4·D in said flow direction where D is the internal diameter of said fluidized bed reactor unit (41) at the level of said particle inlet (64).

## Description

### FIELD OF THE INVENTION

The present invention relates to a reactor system comprising a first reactor unit with an outlet for an product stream comprising a solid phase product in particulate form, and a fluidized bed reactor unit provided with a particle inlet coupled to the outlet of the first reactor unit, with a fluidization gas feed at its base and with and a product outlet.

The invention further relates to a method of operating a reactor system comprising a first reactor unit and a fluidized bed reactor unit for the preparation of a solid phase product, comprising the steps of operating the first reactor unit to produce a product stream comprising a solid phase product in particulate form; and operating the fluidized bed reactor unit for further growth onto said solid phase product in particulate form.

### BACKGROUND OF THE INVENTION

The catalytic polymerization of olefins uses among others a catalyst of the Ziegler-Natta type. New generations of catalyst for olefin polymerization including single site catalysts have been developed in view of a more regular polymer structure. During the catalytic polymerization the olefin composition is substantially constant around the particle. As a result hereof, polyolefins produced turn out to have a relatively narrow molecular weight distribution and composition distribution. The breadth of the molecular weight distribution influences the rheology behaviour and together with the composition distribution the final mechanical properties of the produced polyolefins.

In order to obtain a broader bimodal molecular weight distribution or a broader composition distribution or both, use is made of different reactor conditions, such as different concentrations for monomer, comonomer and/or hydrogen, the use of specific and/or combined catalysts. The different reactor conditions are typically applied in different reactor units, such as cascaded reactors and/or a combination of different reactor units within a single reactor.

One example of the combination of different reactor units within a single reactor system is known from EP2090357-A1. Herein, a moving bed reactor unit is combined with a fluidized bed reactor unit. The moving bed reactor unit is governed by a different flow regime than the fluidized bed reactor unit. Typically, a moving bed is characterized as a bed of (polymeric) particles, which move downwards in a substantially plug flow mode, while the fluidized bed reactor is characterized as a bed of polymer particles which are supported by a stream of upwards moving gas.

For clarity it is observed that both in the moving bed reactor (to which will be referred also as MBR) and the fluidized bed reactor (also referred to as FBR) the gas flows generally upwards. The main difference is in the flow of the polymer particles. An alternative term to refer to polymer particles is 'powder', which will be used as well hereinafter.

In the FBR the polymer particles are fluidized by the fluidization gas. The superficial gas velocity is greater than the minimum fluidization velocity but smaller than the onset velocity for pneumatic transport. Consequently, the particles are fluidized in the bed which will suitably be well mixed with respect to the particles. The gas flows upwards in plug flow mode. In the MBR the gas velocity (i.e., that of the barrier gas flow) is smaller than the minimum fluidization velocity. The particles thus will typically form a settled bed which moves downwards in essentially plug flow mode. The gas normally flows upwards also in plug flow mode. By "plug flow mode" it is meant that there is little of preferably no backmixing. The moving bed reactor may be positioned within, around or adjacent to the fluidized bed reactor unit.

A further reactor type is a fast fluidized bed reactor (FFBR). In the FFBR the superficial gas velocity is greater than the onset velocity for pneumatic transport. The particles are entrained with the gas flow out of the reactor. US5,698,642 discloses a FFBR, wherein the entrained particles are directed to a MBR and therein compressed together to a higher density under the influence of gravity. A FFBR and a MBR form a circulating reactor, i.e. substantially all the polymer particles circulate from FFBR into MBR and back into the FFBR. This necessary circulation reduces the operation freedom of tuning residence times. Since the residence times have an impact on the properties of the resulting polymer, independent control of the residence times in the MBR and the FBR is preferred.

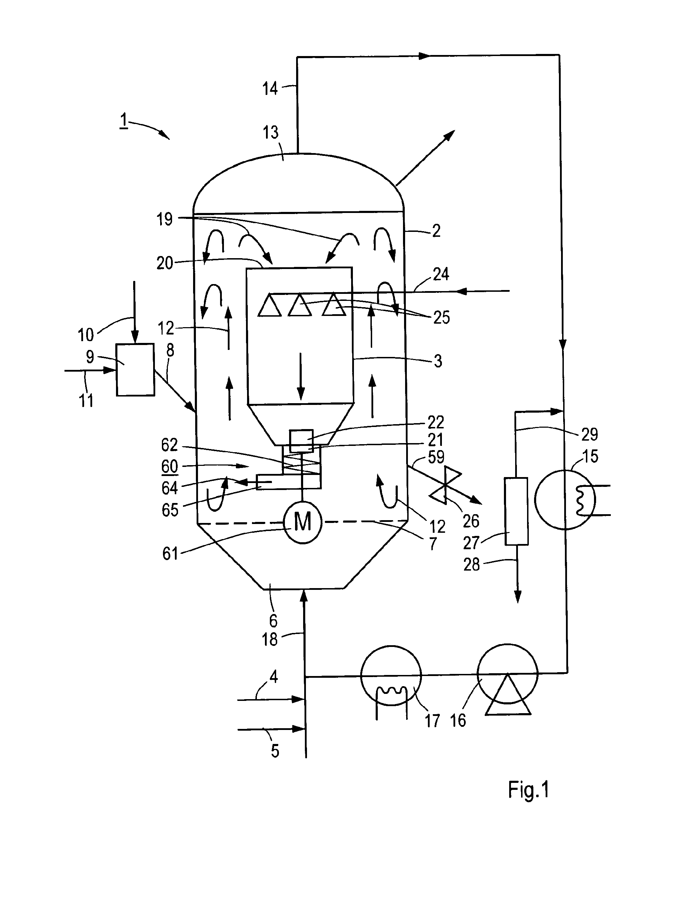

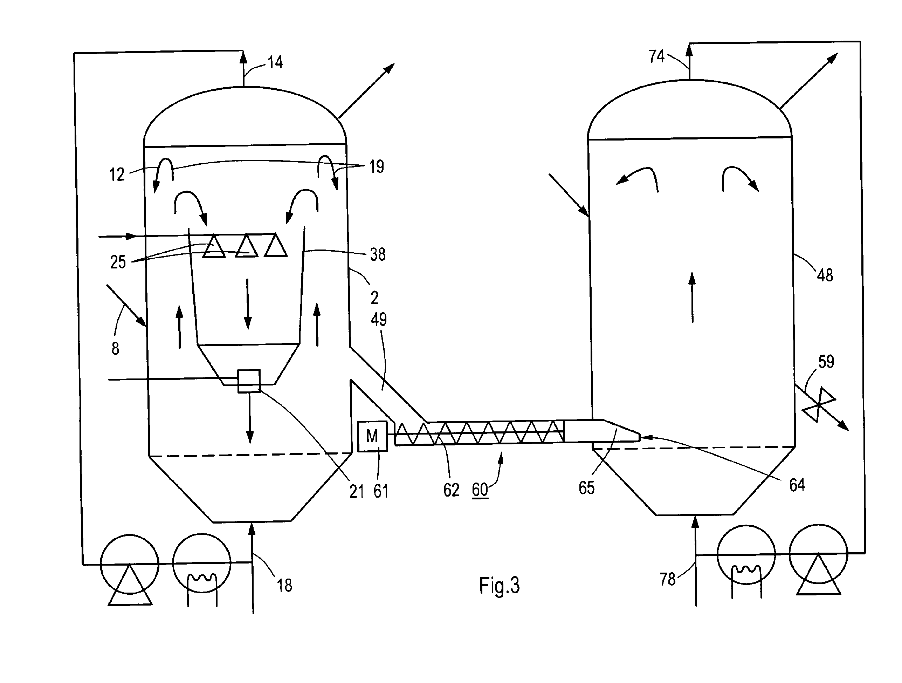

One relevant way of controlling residence time in the MBR resides in the use of means for controlling the outflow of the MBR. EP2090357 discloses means for displacing metered quantities of polymerized particles from the moving bed unit into the fluidized bed unit at the outlet of the moving bed reactor. This means provides a well-defined volume per unit of time for the outflow of particles from the moving bed reactor unit. Examples of such means that are connected to the outlet of the moving bed unit, include a screw, a rotary scooper and piston means. Fig. 4 of EP2090357 illustrates the use of a rotary scooper in a configuration wherein the MBR is located externally from the FBR. A downwards oriented transfer pipe is connected to the scooper. This transfer pipe transfers the polymer particles into the FBR. Fig 1,3,5 and 6 of EP2090357 illustrate the use of a vertical screw in a configuration wherein the MBR is located within the FBR. Fig. 3 discloses a specific embodiment of a vertical screw that is provided with a horizontal outlet. The screw within its housing defines a zone towards the outlet wherein the polymer particles are mutually compressed during their transfer towards the outlet. They form a seal against the inflow of fluidization gas via the outlet into the moving bed unit.

It appears that the two discussed embodiments of EP2090357 - rotary scooper and vertical screw - lead to a different operation and different industrialization problems. The screw is never completely filled. This results in the risk of inflow of fluidization gas into the moving bed reactor via its outlet. It was found in particular that at higher operation frequencies of the screw, e.g. at 20 Hz and higher, transmission of forces from motor to screw failed. This failing transmission appears due to a piling up of polymerized particles at and/or near to the outlet.

Solving this problem turns out to be all but simple. When merely increasing the size of the outlet, the seal at the outlet is destroyed. This seal, created by the densification of the outflow stream, prevents the fluidization gas from entering the transfer pipe. This backwards flow of fluidization gas has a negative influence on the control of residence time in the moving bed reactor. When very large, it may even fluidize all or some of the particles in the moving bed reactor thus disrupting the particle flow in the moving bed reactor. Due to the correlation between residence times in the two reactors on one hand and the product properties on the other hand, this may lead to quality loss of the resulting product.

The rotary movement of the rotary scooper does not have the same issues. The scooper design does not include a continuous path through which fluidization gas may reach the moving bed reactor. However, the rotary scooper has the problem that the refluidisation of polymer particles in the FBR is more difficult. The velocity of the polymer particles resulting from a scooper tends to be lower than that resulting from a screw, so that the polymer particles are not distributed well when introduced into the FBR. Moreover, a rotary scooper is comparatively large. The transfer pipe then enters the FBR at a low height, i.e. near to a fluidization grid typically applied for generation of the fluidization.

Both the low level entry and the low velocity of the polymer particles have a negative impact on refluidisation. The refluidisation could be improved by using more fluidization gas and/or higher gas velocity. But this has an impact on the overall reaction conditions in the FBR. Additionally, when increasing the amount of fluidization gas and/or its velocity, more fluidization gas will enter the moving bed reactor, through inlet or outlet thereof. However, this is typically not desired, as it is more expensive and leads to again other operational problems.

Moreover, a general concern for moving bed reactors is the barrier gas efficiency. Barrier gas is needed for the removal of certain undesired gas components in the stream from the fluidized bed reactor into the moving bed reactor. Such gas components are undesired in the moving bed reactor, so as to arrive at desired product properties. Examples of such undesired components include, among others, hydrogen and comonomer. Instead of being completely undesired, it may be that the concentration in the moving bed reactor should be different from the concentration of the component in the fluidized bed reactor. However, when using too much barrier gas, the total gas feed rate may become higher than what is consumed in the process. Any excess gas then needs to be vented and recovered, or even flared. This would waste a lot of useful raw material, leading to an uneconomical process. The entry of additional fluidization gas into the moving bed reactor reduces the barrier gas efficiency, or in other words, requires the use of more barrier gas to reach the same barrier gas efficiency.

### SUMMARY OF THE INVENTION

It is therefore an object of the present invention to provide a reactor system of the kind mentioned in the opening paragraph, which allows a stable operation over a wide throughput range while minimizing the use of the barrier gas, and enables a good control over the residence times of the polymer particles in the first reactor unit within the reactor system.

It is a further object of the invention to provide a method of operating such a reactor system.

This first object is achieved in a reactor system comprising:
- a first reactor unit with an outlet for a product stream comprising a solid phase product in particulate form, and
- a fluidized bed reactor unit provided with a particle inlet coupled to the outlet of the first reactor unit, with a fluidization gas feed at a base of the fluidization bed reactor unit and with a product outlet,
- a transportation pipe coupling the outlet of the first reactor unit to the particle inlet of the fluidized bed reactor unit, and comprising mechanical displacement means embodied as a screw and driven to rotate at a predefined rotation speed, and a densification zone defined between said mechanical displacement means and said particle inlet, in which densification zone, in operation, a density of the product stream is increased, said densification zone defining a flow direction of the product stream into said fluidized bed reactor unit,
wherein an unobstructed space is defined in said fluidized bed reactor unit, the space extending from said particle inlet over a distance of at least 0.4·D in said flow direction where D is the internal diameter of said fluidized bed reactor unit at the level of said particle inlet.

The construction of the present invention effectively bolster the outflow rate from the first reactor unit. The enhancement of the outflow rate results in increased resistance against the pressure of the fluidization gas to enter the first reactor unit through its outlet. By increasing the density of the stream per volume in the densification zone, the higher density acts as a gas plug and stops the gas from the second reactor from entering the transfer pipe and the first reactor. And the higher outflow rate makes it more difficult for any fluidization gas to go in the counter direction against this flow.

The polymer enters the fluidized bed reactor unit through the particle inlet, which is present at a location where there are no obstructions within the range of about 0.4·D, preferably 0.5·D, from the particle inlet, where D is the internal diameter of the fluidized bed reactor. By obstructions it is here meant walls of the reactor, walls of inserts within the reactor and similar. Therewith a distribution of powder takes place, and the thus distributed product stream can be refluidized with the fluidization gas. Preferably, the internal diameter D of the fluidized bed reactor at least 0.5 meter, more preferably at least 0.6 meter, and in some embodiments at least 0.75 meter or at least 1.0 meter.

The flow direction is defined in the densification zone; as the product stream flows with a flow rate having a magnitude and direction, the product stream continues to flow with this flow rate, in the flow direction, upon leaving the densification zone and entering the fluidized bed reactor unit. In one preferred embodiment, the flow direction defined in the densification zone is oriented upwards or sidewise. This appears to reduce agglomeration and refluidization issues. It has been found that the barrier gas flow may be substantially reduced, e.g. with at least 20%, more preferably at least 40%, and for instance around 50%.

Suitably, the orientation of the densification zone is upwards, e.g. with an angle between 0 and 60 degrees with respect to a horizontal plane. The angle is suitable smaller than 45 degrees, for instance between 15 and 45 degrees. This orientation may lead to an even better mixing of both components of the product stream - polymer particles and fluidization gas - through the fluidized bed reactor.

In one embodiment, the densification zone comprises a pipe-shaped section between the first reactor unit and the fluidized bed reactor unit. The pipe-shaped section is to act as a neutral zone with a flow regime that can be different from that of the first reactor unit and the fluidized bed reactor unit. It therewith also separates the fluidized bed, and particularly the fluidization gas, from the first reactor unit, particularly the moving bed reactor. Therewith, the pipe-shaped section forms an additional barrier against the inflow of fluidization gas into the first reactor unit through its outlet. It will be understood that the term 'pipe-shaped' is intended broadly and does not impose limitations on diameter, length, ratio of diameter and length and on variation of diameter.

It is observed for clarity that, the densification zone is the section of the transportation pipe which is limited by the end of the mechanical displacement means on one hand and the particle inlet into the fluidized bed reactor, on the other hand. If the densification zone is missing then the outlet is immediately after the mechanical displacement means (i.e., the screw). The greater the length/diameter ratio of the densification zone is (i.e., the longer the zone is) the better the barrier effect, at least to some limit. Preferably, the densification zone has a ratio of the length to diameter of at least 0.2, more preferably at least 0.75, more preferably of at least 1 and in particular of at least 1.2. While shorter length of the densification zone may be sufficient to produce a stable powder flow it may be not sufficient to achieve the desired gas barrier effect. More preferably, the densification zone has a minimum length of 0.2D, wherein D is the diameter of the fluidized bed reactor. A most suitable length is 0.3-0.5D. Evidently, the densification zone could be longer, if for practical reasons the distance between first reactor unit and fluidized bed reactor unit is larger. The diameter of the densification zone is herein to be read as the internal diameter of the transportation pipe. Where the densification zone has a varying diameter, this internal diameter is the maximum thereof.

In an alternative embodiment, the densification zone comprises a narrowing portion. Such narrowing portion acts more strongly as a seal against inflow. Electromechanical means may be present, so as to vary the shape of the densification zone, i.e. between a pipe-shaped portion and a narrowing portion, and by variation of the internal angle of the narrowing portion.

In a further embodiment, the transportation pipe has an outlet that is provided with a surface area larger than a surface area normal to an axis through the transportation pipe. This larger surface area is for instance implemented by leaving out a portion of the pipe-housing. The outlet is then a face including an angle smaller than 90 degrees with respect to the axis through the transportation pipe.

Most suitably, the first reactor is a moving bed reactor. It is an advantage of the invention that the loading of polymer particles into the reactor system may be increased. The fluidized bed reactor is then operated as a dense fluidized bed reactor. Such increased loading leads to process efficiency.

Preferably, the moving bed reactor and the fluidized bed reactor are independently controlled. A first implementation of such independent control is the provision of a control of the outflow rate of the moving bed reactor. A further implementation of such independent control is the location of an inlet of the moving bed reactor in the fluidized bed reactor so that part of the material from the fluidized bed reactor may be transferred into the moving bed reactor, whereas the other part remains in the fluidized bed reactor. Hence, the number of cycles that polymer particles reside in the first and second reactor need not to be identical. As discussed in EP1636277, which is herein included by reference, the independent control enables variation of the molecular weight distribution of the polymer product. Particularly, bimodal distributions of the molecular weight have been obtained, while nevertheless obtaining a sufficiently high average molecular weight. What is important here is the material made in the moving bed reactor. In the moving bed reactor, the highest molecular weight is made. If that material is not properly mixed in the individual particles, inhomogeneity in the final material might occur. By having a controlled residence time in the moving bed reactor and forcing the particles also through the fluidized bed, no particles will consist of only material made in the moving bed. I.e. comparing this system to two reactors in series (which could make the same molecular weight distributions), the superior material homogeneity is the key improvement.

In a further implementation, the mechanical displacement means are controlled in dependence on the outflow rate of the moving bed reactor. Therewith, it may be achieved that the resulting pressure build up in the transportation pipe is sufficient to prevent the fluidization gas from entering the moving bed reactor.

According to a second aspect, the invention relates to a method of operating a reactor system comprising a first reactor unit and a fluidized bed reactor unit for the preparation of a solid phase product. The method comprises the steps of: (1) operating the first reactor unit to produce a product stream comprising a solid phase product in particulate form; (2) maintaining a fluidized bed in the fluidized bed reactor unit by feeding fluidization gas from the base of said fluidized bed for further growth onto said solid phase product in particulate form (3) actively transporting said product stream into the fluidized bed reactor unit. This active transportation comprises the steps of:
a) using mechanical displacement means embodied as a screw and driven to rotate at a predefined rotation speed, so that the product stream starts flowing;
b) passing said flowing product stream through a densification zone downstream of said mechanical displacement means, where the density of said product stream is increased in said densification zone, and wherein said densification zone defines a flow direction of the product stream;
c) discharging said flowing product stream into an unobstructed space in said fluidized bed reactor unit through said particle inlet along said flow direction, which unobstructed space extends from said particle inlet over a distance of at least 0.4·D in said flow direction where D is the internal diameter of said fluidized bed reactor unit at the level of said particle inlet, and
d) refluidizing said product stream distributed in said unobstructed space in the fluidized bed.

Preferably, the first reactor unit is a moving bed reactor unit wherein a settled bed of polymer is formed which moves downwards in generally plug flow mode. Suitably, the first reactor unit is a moving bed reactor unit which is operated at a higher bed density than the fluidized bed reactor unit. Most preferably, the fluidized bed reactor is operated at a bed density of about the Fluidized Bulk Density. Operation of the reactor system at high densities, particularly densities at about the Fluidized Bulk Density is commercially attractive, but bears a higher risk for agglomeration, or alternatively, insufficient refluidization. It is to be taken into account that fluidization gives rise to an expansion in the order of 10-40%, typically approximately 30%. When thus a dense product stream from the moving bed reactor enters the fluidized bed reactor, that has already a relatively high bed density of polymer particles, this easily tends to give problems.

Specifically, a barrier gas flow is used which has a flow rate of at most 50% higher than a powder flow rate entering the fluidized bed reactor unit. Reduction of the barrier gas flow leads to a direct cost reduction. Moreover, recycling or flaring of excess barrier gas may be prevented. However, in accordance with the invention, such reduction in barrier gas flow does not lead to a worse result. As will be explained in the examples, a required or desired barrier efficiency can nevertheless be achieved. The barrier efficiency is a parameter specifying a concentration difference of a certain component between the moving bed reactor and the fluidized bed reactor. Typically, this component is substantially undesired in one of the reactors, for instance in the moving bed reactor (hereinafter also referred to as 'undesired component'). Control of the barrier efficiency is typically governed by the barrier gas flow. More preferably, the barrier gas flow is even lower than the powder flow rate.

Preferably, a barrier gas flow is introduced into the first reactor unit to a location not higher than 75 % of the height of the moving bed. More preferably, this introduction occurs at a location not higher than 50% of the height of the moving bed. The moving bed refers herein to the actually created plug flow regime, instead of the height of the moving bed reactor. The height of the moving bed is typically 15-40% lower than the height of the moving bed reactor unit.

### BRIEF DESCRIPTION OF THE FIGURES

These and other aspects of the reactor system and the method in accordance with the invention will be further elucidated with reference to the Figures, in which:
Fig. 1 shows a diagrammatical view of a reactor system according to the prior art;
Fig. 2 shows a diagrammatical view of a first embodiment of the reactor system, and;
Fig. 3 shows a diagrammatical view of a second embodiment of the reactor system.

### DETAILED DESCRIPTION OF ILLUSTRATIVE EMBODIMENTS

The Figures are diagrammatical in nature and intended for illustrative purposes only. The Figures are not drawn to scale and equal reference numerals in different figures refer to identical, same or similar features.

Figure 1 shows a prior art reactor system 1 for the catalytic polymerization of olefins, as known from EP-A 2090357. α-Olefins used in the process according to the invention comprise C₂-C₁₂-olefins, preferably C₂-C₈-olefins such as ethylene, propylene, butene-1, pentene-1, hexene-1, 4-methyl-1-pentene and 1-octene. These 1-olefins may be used for the production of homopolymers. Copolymers may be produced using for instance ethylene and/or propylene in combination with other C₂-C₈-alpha-olefins. Higher 1-olefins or polyenes may be used for copolymerization, such as dienes, for instance 1,4-butadiene, 1,6-hexadiene, dicyclopentadiene, ethylidene norbornene and vinyl norbornene. Ziegler-Natta catalysts are conventionally used and commercially available and selected as desired. The preparation of Ziegler-Natta catalysts is disclosed, among others, in EP-A-688794, WO-A-999/51646, WO-A-01/55230, WO-A-2005/118655 and EP-A-810235.

The reactor system 1 of this first embodiment comprises a fluidized bed reactor 2 within which a moving bed reactor 3 is centrally arranged. Monomer is provided to the fluidized bed reactor 2 via line 4. Inert gas, comonomer and/or hydrogen may optionally be added via line 5. The monomer and other optional gases enter an inlet chamber 6 of the fluidized bed reactor 2 through inlet 18 together with fluidization gas that has been recirculated. To make sure that the gas flow is uniformly distributed over the cross-sectional surface area of the inlet chamber 6, the inlet pipe may be equipped with a flow dividing element as known in the art, e.g. EP-A 684871. A fluidization grid 7 is provided on top of the inlet chamber 6. The reactants enter the reactor 2 through the fluidization grid 7 as fluidization gas. The purpose of the fluidization grid 7 is to divide the gas flow evenly through the cross-sectional area of the bed. In this embodiment, with the moving bed 3 located within the fluidized bed reactor 2, it is preferred to arrange the fluidization grid so as to establish a gas stream to sweep along the reactor walls.

The fluidization gas passes through the fluidized bed. The superficial velocity of the fluidization gas must be higher than a minimum fluidization velocity of the particles contained in the fluidized bed, as otherwise no fluidization would occur. On the other hand, the velocity is most suitably lower than the onset velocity of pneumatic transport, as otherwise the complete bed would be entrained with the fluidization gas. Catalyst or polymerized catalyst [e.g. catalyst onto which polymer is grown already so as to form a composition of polymer and catalyst] is added via line 8 from a unit 9 supplied via lines 10 and 11. It may be introduced into the reactor in various ways, either continuously or intermittently. Polymer is formed in a polymerization reaction in the reactor system 1 on the catalytic particles, resulting in polymer particles, and heating of the gas by the reaction heat. The composition of the formed polymer is dependent on the reaction conditions, such as the concentrations of the monomer, co-monomer and hydrogen and the reaction temperature. The polymer particles become part of a fluidized bed that is generated and maintained sidewise around the moving bed reactor 3. The maintained fluidized bed is visualized by the arrows 12. The polymer particles are separated from the gas in a disengaging section at the top of the fluidized bed. The fluidized bed is maintained through the updwards flowing gas stream. To establish this stream gas is withdrawn from the upper part of the fluidized bed reactor via the recirculation means 14. These means 14 include a recirculation line 14, optionally a heat exchanger 15 for cooling, a compressor 16 and optionally a further heat exchanger 17. The gas is suitably cooled to a temperature which is lower than that of the bed to prevent the bed from heating because of the reaction. It is also possible to add condensing agents into the recycle gas stream. Such condensing agents are typically non-polymerisable components, such as propane, n-butane, isobutane, n-pentane or isopentane which are at least partially condensed in the cooler.

The inlet of the moving bed reactor is arranged in this embodiment within the fluidized bed reactor. Therefore, part of the material from the fluidized bed reactor - visualized by arrows 19 - may be transferred into the moving bed reactor, whereas the other remaining part is further fluidized and mixed in the fluidized bed reactor. This allows that the numbers of cycles that polymer particles have gone through the fluidized bed reactor 2 and the moving bed reactor 3 may be different. This is suitable for obtaining a desired molecular weight distribution in combination with a desired average molecular weight. A most preferred weight distribution is a bimodal distribution. Particulate material entering the moving bed reactor 3 will form a bed of settled polymeric particles which move slowly downwards in a more or less plug stream towards the outlet of the moving bed which is partly closed off by a valve 22 controlled via a control line. A cushion of barrier gas is formed on the downwards moving bed of polymeric particles. Examples of barrier gas any component in vapour form which does not disturb and/or inhibit the desired reaction, for instance ethylene, propane, propylene, pentane, butane, nitrogen. Polar compounds are typically undesired for use in or as barrier gas. The barrier gas is added via the line 24 and the nozzles 25. The barrier gas is added in order to apply different polymerization conditions in the moving bed than in the fluidized bed and it is suitably added to the lower part of the moving bed reactor, that is, to a location within the lower half of the settled bed. For example, a polymerization is carried out in the moving bed reactor at a lower concentration of a chain transfer agent such as hydrogen. The barrier gas may be a gas or a liquid or a combination thereof. It may be inert to the catalytic polymerization, such as nitrogen and C₁-C₁₂-alkane. Alternatively or additionally, the barrier gas may comprise reactive components, such as monomer and/or co-monomer. Preferably, use is made of a liquid barrier gas that evaporates under the conditions residing in the moving bed reactor 3. In this manner a gas cushion of barrier gas is formed during evaporation and cooling of the exothermic polymerization reaction occurs. The addition of barrier gas may be such that a condensed mode polymerization occurs. After a sufficient total residence time in both the fluidized bed reactor 2 and the moving bed reactor 3, a stream of polymer and gas (i.e. the final product) is removed via the outlet 59 provided with a valve 26. The polymer is separated from the gas in a separator 27 and removed via outlet 28, whereas gaseous material is recycled via line 29 and recirculation line 14. The polymeric product may be withdrawn from the gas phase reactor (i.e. the fluidized bed reactor) either continuously or intermittently. Combinations of these methods may also be used. Continuous withdrawal is disclosed, among others, in US-A-4621952, EP-A-188125, EP-A-250169 and EP-A-579426.

The reactor system 2 is provided with a transportation pipe 60 in accordance with the invention. The transportation pipe 60 connects the outlet 21 of the moving bed reactor 3 with a particle inlet 64 of the fluidized bed reactor 2, and transports thus a product stream of the moving bed reactor 3 into the fluidized bed reactor 2. In this embodiment, the transportation pipe comprises displacement means 62, which are driven by a motor 61. The displacement means is in this example a conveyer screw. The product stream from the moving bed 3 enters through displacement means 62 a further section. This is typically arranged so as to achieve densification, and is therefore a densification zone 65. The densification mainly comes from the fact that the screw conveys the polymer forward until the densification zone. Then the movement is only achieved by the pressure generated by the powder which enters the densification zone from the screw. This also leads to a tighter packing of the powder in the densification zone.

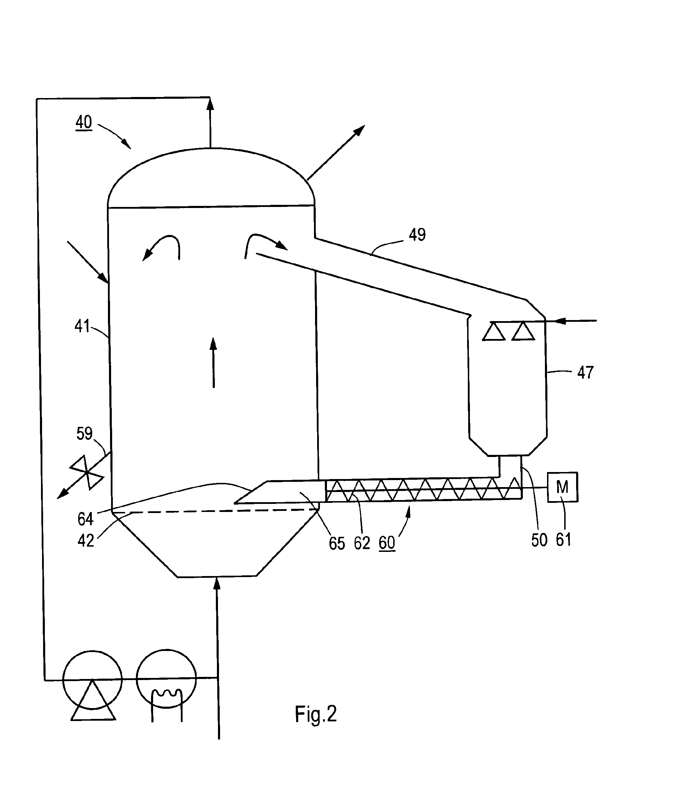

Fig. 2 shows in diagrammatical view a first embodiment of the reactor system 40 of the invention. For sake of clarity, the means for maintaining the fluidized bed and the components for introducing catalyst have not been shown in full detail here. The fluidization grid is referred to with reference numeral 42, the outlet of the first reactor unit is referred to with reference numeral 50. It is to be understood that they are present in the same way as shown in Fig. 1. This Fig. 2 shows an embodiment in which the first reactor unit 47 is arranged adjacent to the fluidized bed 41. Due to the inlet 49 of the first reaction unit 47 residing into the fluidized bed 41, this embodiment allows as well that part of the particulate material enters the first reactor whereas the other part remains in the fluidized bed reactor.

The first reactor unit 47 of this embodiment is preferably a moving bed reactor. It is not excluded that more than one moving bed reactor is combined with a single fluidized bed reactor. Preferably, each moving bed reactor is provided at substantially equal distance from the fluidized bed reactor 41. A volume ratio between 1 and 10 between the moving bed reactors is deemed beneficial. The use of more than one moving bed reactor in combination with a single fluidized bed reactor may be advantageous for the perspective of operation (i.e. better control and easier maintenance of the moving bed). Additionally, it may be used so as to create different conditions in the moving bed reactor units, and/or to create copolymers in a highly controlled manner.

The transportation pipe 60 of this embodiment extends from the outlet 50 of the moving bed reactor 47 into the fluidized bed reactor 41. Such extension into the fluidized bed reactor 41 is suitable for a homogeneous distribution of the particles. The particle inlet 64 into the fluidized bed 41 may be provided with further means so as to optimize distribution. The transportation pipe shown here is moreover provided with a densification zone 65 in order to enable sufficient densification of the product stream. The densification zone 65 may be configured as a pipe section with decreasing diameter, but that is not necessary to obtain the effect of densification. The outlet 50 of the moving bed reactor 47 may be provided with an outlet control, such as a valve. Alternatively, the displacement means 62 may be operated so as to define the outflow rate.

In accordance with the invention, an unobstructed space A is defined in said fluidized bed reactor unit, the space extending from said particle inlet over a distance of at least 0.4·D in said flow direction where D is the internal diameter of said fluidized bed reactor unit at the level of said particle inlet, and particularly in the flow direction. The distance is preferably at least 0.5D. For a moving bed reactor that is located externally, the distance may be much larger, up to 1 D. However, also in such case, it may be suitable to locate the particle inlet more towards or even in the centre of the fluidized bed reactor. For a moving bed reactor that is located inside the fluidized bed reactor unit, the particle inlet is suitably provided upwards, and at sufficient distance from the outlet of the moving bed reactor. Due to the flow direction thus arranged, an additional unobstructed space is created. The term 'unobstructed space' refers to a space substantially without objects or faces that can hinder turbulent flow of particles and fluidization gas. Suitably, the unobstructed space is free of any objects. The unobstructed space preferably has a dimension of at least 0.4D normal to the flow direction. More preferably, such an extension is present in the flow direction of fluidization gas. Preferably such extension is present over at least 50% of said distance in the flow direction, more preferably over at least 70%, most preferably over at least 80%.

In operation, the displacement means 62 will substantially increase a flow rate of the product stream of the moving bed reactor. Particularly, the amount of polymer particles per volume unit is increased. The density of the polymer material as such is herein not changed, but the stream density increases since the polymer particles are more closely packed. Suitably, the bed density in the fluidized bed reactor 41 equals to the fluidized bulk density of the particles, which is typically in the order of 200 to 400 kg/m³, and tends to be higher for polypropylene (300-400 kg/m³) than for polyethylene (200-300 kg/m³). The bed density is anyway higher than in fast fluidized bed reactors and is thus a 'dense' Fluidized Bed Reactor (FBR). The bed density in the moving bed reactor 47 is suitably in the order of the Settled Bulk Density, which is typically in the order of 350-500 kg/m³, with again for polypropylene (400-500 kg/m³) higher than for polyethylene (350-450 kg/m³).

Most suitably, the density of the powder bed in the FBR is in the range of 50 to 85 % of the settled bulk density, more preferably from 65 to 75%, for instance 70% of the settled bulk density. The density of the powder bed in the moving bed reactor (MBR) is 70-100% of the settled bulk density. The density of the powder bed in the densification zone is 100-120% of the settled bulk density. For the avoidance of doubt, the term 'powder bed' is used herein to describe the bed formed by the polymerized particles.

The design of the transportation pipe may further be tuned in order to arrive at optimum performance. The angle between the mechanical displacement means 62 and the densification zone is preferably between 150 and 210 degrees in accordance with the invention, and more preferably around 180 degrees (straight). In the shown implementation, the outlet 64 of the transportation pipe 60 has an extended surface area resulting from its oblique orientation with respect to the densification zone. In another implementation, the transportation pipe 60 may be provided with more than one outlet 64 so as to distribute the particles homogeneously throughout the fluidized bed reactor 2. It is preferred that the particle inlet 64 to the fluidized bed 2 is present above the fluidization grid 42.

The first reactor unit 47 has in this example an outlet flow which is controlled in that its opening is narrower than the diameter of the reactor unit 47. Preferably the ratio between the diameter of the third reactor unit 48 and the outlet 50 is above 10, preferably above 25 and preferably less than 100. Alternatively, the reactor unit 47 may be provided with a valve.

Fig. 3 shows a further embodiment in accordance with the invention. The first reactor unit 2 is herein a reactor system comprising a fluidized bed reactor unit and a moving bed reactor unit 38. The moving bed reactor unit 38 is herein located within the fluidized bed reactor. This is however an embodiment and an alternative configuration such as shown in Fig. 2 is not excluded. A product stream leaves this reactor through outlet 49. It reaches a further fluidized bed reactor 48 through the transportation pipe 60. The further fluidized bed reactor 48 is in this example provided with means 74 for maintaining the fluidized bed, which allow recirculation of fluidization gas. Such means 74 are functionally and preferably structurally identical to the means 14. Variations to the basis configuration of such means 14, 74 are known per se and need no further elaboration at this point. It will be understood that the further fluidization bed reactor 48 is further provided with a particle inlet 78 and a product outlet 59. The advantage of the present coupling of the reactors 2, 48 via a transportation pipe comprising mechanical displacement means is that the operation conditions in the first reactor unit 2 may be maintained differently from those in the fluidized bed reactor 48.

### EXAMPLES

Settled bulk density was measured according to ASTM D1895-96, method A.

In the examples below carbon dioxide was used as a marker for an undesired component.

### Example 1 (Comparative)

The equipment according to Example 1 of EP-A-2090357 was operated at different frequencies of the motor of the screw feeder. The moving bed reactor (MBR) was installed concentrically within the fluidized bed reactor (FBR) as shown in Figure 3 of EP-A-2090357. The diameter of the fluidized bed was 630 mm and the diameter of the MBR was 158 mm. The screw conveyor was in vertical orientation pushing the polymer downwards. The transportation pipe with a diameter of 154 mm was directed towards the wall of the FBR so that the distance of end of the transportation pipe and the reactor wall was about 0.12 times the diameter of the FBR. The fluidization gas flow was 135 kg/h. The polyethylene powder had a settled bulk density of 410 kg/m³. The powder flow at different frequencies of the motor of the screw is shown in Table 1 below (higher frequency corresponds to a higher rotation of the screw).

**Table 1: Powder flow at frequencies 5 to 20 Hz**

| Frequency, Hz | Powder flow, m³/h |
|---|---|
| 5 | 2.2 |
| 10 | 4.0 |
| 15 | 6.3 |
| 20 | 8.3 |

In the range 20... 50 Hz, the transmission of forces from motor to screw failed. This is considered to be due to insufficient re-fluidisation near the outlet of the densification zone.

### Example 2 (Comparative)

The process of Example 1 was repeated but without the densification zone. The outlet was downwards immediately after the screw. No polymer could be removed from the MBR.

### Example 3 (Comparative)

In this experiment a FBR having an internal diameter of 630 mm was used. The FBR was connected to an externally installed MBR having an internal diameter of 292 mm. The fluidized bed had a height of about 2200 mm and the polymer from the MBR was introduced into the FBR using a transfer pipe, i.e. a pipe around the displacement means in the form of a screw. The centre of the transfer pipe was at a level of about 200 mm above the fluidization grid. The transfer pipe having a diameter of 154 mm ended at the wall of the FBR. The screw was in a horizontal position. There was no densification zone at the end of the transfer pipe.

The fluidized bed and the moving bed consisted of polyethylene powder as in Example 1 together with the fluidization gas (in the FBR) or the barrier gas (in the MBR). The density of the fluidized bed was 285 kg/m³. The flow of the fluidization gas was 110 m³/h. The density of the moving bed was 410 kg/m³. The polymer could be fed into the fluidized bed without problems. The powder flow vs. the frequency of the motor is shown in table 3 below.

**Table 3**

| Frequency, Hz | Powder flow, m³/h |
|---|---|
| 7 | 2.2 |
| 8 | 2.4 |
| 9 | 3 |
| 10 | 3.8 |
| 12 | 5.3 |
| 15 | 7.8 |
| 20 | 12.0 |

Barrier efficiency at the level of 270 mm above the base of the MBR (or at the depth of the bed of 1600 mm) was 100% at a frequency of 10 Hz and a barrier gas flow of from 5.6 to 9.7 m³/h. This means that the concentration of the undesired component is around zero in about 14 vol% of the MBR.

The barrier efficiency at a given point in the moving bed reactor (MBR) can be defined as (C₀-C)/C₀*100%, where C is the concentration of a component at a given point in the MBR and C₀ is the concentration of this component in the fluidization gas. The component is typically undesired in the moving bed reactor. The barrier efficiency is measured by measuring the composition of the fluidization gas on one hand and the gas composition in the MBR on the other hand. The composition is conveniently measured using on-line gas chromatography according to standard methods used for detecting such compounds. In the present examples CO₂ was used as a marker of an undesired component.

The depth refers to the MBR and is the level which is 1600 mm below the surface level of the moving bed. The FBR stands beside the MBR but the top level of the fluidized bed is not necessarily the same as the top level of the moving bed. In this Example 3 the bed height in the FBR was 2200 mm. The height of the FBR is thus greater than 2200 mm. The height of the moving bed is in this example about 1870 mm (270 mm + 1600 mm). A gas space is present above the top of the moving bed (as well as above the top of the fluidized bed). The base of the MBR refers to the level at which the outlet of the MBR into the pipe is present.

### Example 4

The procedure of Example 3 was repeated except that at the end of the transportation pipe there was a densification zone having a length of 275 mm. The transportation pipe ended at the wall of the fluidized bed reactor. The densities of the fluidized bed and the moving bed were as in Example 3. The density at the densification zone was 450 kg/m³. The powder flow vs. the frequency of the motor is shown in table 4 below.

**Table 4**

| Frequency, Hz | Barrier gas flow, m³/h | Powder flow, m³/h |
|---|---|---|
| 10 | 0 | 2.3 |
| 10 | 2.1 | 3.0 |
| 10 | 6.5 | 3.2 |
| 10 | 10.8 | 3.8 |
| 20 | 0 | 4.3 |
| 20 | 2.1 | 5.7 |
| 20 | 6.5 | 7.0 |
| 20 | 10 | 7.5 |
| 30 | 0 | 7.2 |
| 30 | 2.1 | 9.0 |
| 30 | 6.5 | 9.5 |
| 30 | 10.8 | 9.8 |

Barrier efficiency at the level of 270 mm above the base of the MBR (or at the depth of the bed of 1600 mm) was 100% at a frequency of = 10 Hz and a barrier gas flow of 2.5 m³/h.

Hence, when comparing Examples 3 and 4, the barrier gas flow at the same screw frequency and at the same depth in the reactor is lower in Example 4 than in Example 3. The effect of the densification zone is thus that a smaller flow of barrier gas is sufficient to reach a given barrier efficiency. This is beneficial because it improves the production economy: smaller gas flow means lower raw material cost. Especially, if the total gas feed rate is higher than what is consumed in the process the excess gas needs to be recovered or flared. This would waste a lot of energy or useful raw material and lead to an uneconomical process.

### Example 5

The procedure of Example 4 was otherwise repeated but the screw and the powder transportation pipe were in an upwards inclined position with 30° slope. The feed point was about 500 mm above the fluidization grid. The length of the densification zone was 240 mm. Tables 5 and 6 disclose the results hereof. The barrier efficiency is reduced at small depths below the bed level (compare experiments 295 and 298) while reducing the barrier gas flow. However, the barrier efficiency at the lower gas flow is nevertheless sufficiently large, and hence the concentration of undesired component sufficiently low. This becomes particularly upon comparison with Example 3, wherein the barrier efficiency is 100% only in 14 vol% of the reactor. In the current example, the barrier efficiency is 100% in 40 vol% of the reactor and 85% or more in 67% of the reactor, even when reducing of the barrier gas flow to approximately half the flow used in Example 3.

**Table 5**

| Exp | FG | Frequency | BG, bottom | Powder flow | | Barrier efficiency at specified point below the bed level | | | | | |
|---|---|---|---|---|---|---|---|---|---|---|---|
| | m³/h | Hz | m³/h | I/s | m³/h | 3 cm | 13 cm | 23 cm | 30 cm | 33 cm | 60 cm |
| 294 | 130 | 10 | 6 | 0.91 | 3.26 | | | | 90% | | 100% |
| 295 | 130 | 10 | 6 | 0.88 | 3.18 | 50% | 88% | 90% | | 90% | |
| | | | | 1.02 | 3.67 | | | | | | |
| 298 | 125 | 10 | 3.6 | 0.91 | 3.26 | 8% | 46% | 73% | | 85% | |
| | | | | 0.88 | 3.18 | | | | | | |

| | | | | | | | | | | | |
|---|---|---|---|---|---|---|---|---|---|---|---|
| FG = fluidization gas flow BG = barrier gas flow Frequency = Frequency of the screw motor | | | | | | | | | | | |

**Table 6**

| Component | BG bottom (m³/h) | Specified point below the bed level | Corresponding volume % of the MBR with at least the barrier efficiency | Barrier efficiency |
|---|---|---|---|---|
| 294 | 6 | 30 cm | 70 vol% | 90% |
| 294 | 6 | 60 cm | 40 vol% | 100% |
| 295 | 6 | 3 cm | 97 vol% | 50% |
| 295 | 6 | 13 cm | 87 vol% | 88% |
| 295 | 6 | 23 cm | 77 vol% | 90% |
| 295 | 6 | 33 cm | 67 vol% | 90% |
| 298 | 3.6 | 3 cm | 97 vol% | 8% |
| 298 | 3.6 | 13 cm | 87 vol% | 46% |
| 298 | 3.6 | 23 cm | 77 vol% | 73% |
| 298 | 3.6 | 33 cm | 67 vol% | 85% |

## Claims

1. A reactor system comprising:
- a first reactor unit with an outlet for a product stream comprising a solid phase product in particulate form, and
- a fluidized bed reactor unit provided with a particle inlet coupled to the outlet of the first reactor unit, with a fluidization gas feed at a base of the fluidization bed reactor unit and with a product outlet,
- a transportation pipe coupling the outlet of the first reactor unit to the inlet of the fluidized bed reactor unit, and comprising mechanical displacement means embodied as a screw and driven to rotate at a predefined rotation speed, and a densification zone defined between said mechanical displacement means and said particle inlet, in which densification zone, in operation, a density of the product stream is increased, said densification zone defining a flow direction of the product stream into said fluidized bed reactor unit,
wherein an unobstructed space is defined in said fluidized bed reactor unit, the space extending from said particle inlet over a distance of at least 0.4·D in said flow direction where D is the internal diameter of said fluidized bed reactor unit at the level of said particle inlet.

2. The reactor system as claimed in Claim 1, wherein the flow direction is oriented sidewise and/or at least partially upwards, preferably with an angle between 0 and 60 degrees with respect to a horizontal plane.

3. The reactor system as claimed in Claim 1, wherein the internal diameter of said fluidized bed reactor unit is at least 0.5 m.

4. The reactor system as claimed in Claim 1, wherein the fluidized bed reactor unit comprises means for maintaining a fluidized bed in the fluidized bed reactor (FBR).

5. The reactor system as claimed in Claim 1 or 4, wherein the first reactor unit is a moving bed reactor unit comprising an inlet residing within the fluidized bed.

6. The reactor system as claimed in Claim 4, wherein the means for maintaining the fluidized bed comprise a gas circulation system coupled to the fluidization gas feed at the base of the fluidized bed reactor (FBR) unit, and a fluidization grid in the fluidized bed reactor such that circulated gas entering the reactor unit passes the fluidization grid, and wherein the particle inlet is present behind the fluidization grid, when seen from the base of the reactor unit.

7. The reactor system as claimed in Claim 1 or 6, wherein the first reactor unit is located externally to the fluidized bed reactor unit.

8. The reactor system as claimed in Claim 1, wherein the first reactor unit has, in operation, a higher bed density than the fluidized bed reactor unit.

9. A method of operating a reactor system comprising a first reactor unit and a fluidized bed reactor unit with a particle inlet for the preparation of a solid phase product, comprising the steps of:
- operating the first reactor unit to produce a product stream comprising a solid phase product in particulate form;
- maintaining a fluidized bed in the fluidized bed reactor unit by feeding fluidization gas from the base of said fluidized bed for further growth onto said solid phase product in particulate form,
- actively transporting said product stream into the fluidized bed of the fluidized bed reactor unit by:
a) using mechanical displacement means embodied as a screw and driven to rotate at a predefined rotation speed, so that the product stream starts flowing;
b) passing said flowing product stream through a densification zone downstream of said mechanical displacement means, where the density of said product stream is increased in said densification zone, and wherein said densification zone defines a flow direction of the product stream, and;
c) discharging said flowing product stream into an unobstructed space in said fluidized bed reactor unit through said particle inlet along said flow direction, which unobstructed space extends from said particle inlet over a distance of at least 0.4·D in said flow direction where D is the internal diameter of said fluidized bed reactor unit at the level of said particle inlet;
d) refluidizing said product stream distributed in said unobstructed space in the fluidized bed.

10. The method as claimed in Claim 9, wherein the first reactor unit is a moving bed reactor unit wherein a settled bed of polymer is formed which moves downwards in generally plug flow mode.

11. The method as claimed in Claim 10, wherein the moving bed unit is operated at a higher bed density than the fluidized bed reactor unit.

12. The method as claimed in any of the Claims 10 to 12, wherein a barrier gas flow is introduced into the first reactor unit to a location not higher than 75 % of the height of the moving bed, preferably not higher than 50% of the height of the moving bed.

13. The method as claimed in Claim 9-13, wherein the solid phase product is a polymer obtained by catalytic polymerization of olefins.

14. The method according to any one of claims 9 - 14 wherein the densification zone has a length to diameter ratio of at least 0.75

15. A method according to claim 15 wherein the densification zone has a length to diameter ratio of at least 1.
